Europäisches Patentamt

European Patent Office

Office européen des brevets

(11) Veröffentlichungsnummer: **0 302 205**
**A2**

(12) **EUROPÄISCHE PATENTANMELDUNG**

(21) Anmeldenummer: 88109728.1

(22) Anmeldetag: 18.06.88

(51) Int. Cl.4: **B66F 9/06 , B66F 9/14 , B66F 9/20**

(30) Priorität: 04.08.87 DE 3725795

(43) Veröffentlichungstag der Anmeldung:
08.02.89 Patentblatt 89/06

(84) Benannte Vertragsstaaten:
AT BE CH DE FR GB IT LI NL SE

(71) Anmelder: **Messerschmitt-Bölkow-Blohm**
**Gesellschaft mit beschränkter Haftung**
**Robert-Koch-Strasse**
**D-8012 Ottobrunn(DE)**

(72) Erfinder: **Drachenberg, Franz**
**Brunnenstrasse 65**
**D-8011 Baldham(DE)**

(54) **Fahrerloses Förderfahrzeug.**

(57) Ein fahrerloses Förderfahrzeug 1 ist mit zwei Regaltürmen 20, 21 und einem zwischen diesen angeoordneten Lastschlitten 24 zur Versorgung der beiden Regaltürme mit Stückgütern versehen. Der in einem Hubgerüst 26, 27 angeordnete Lastschlitten 24 ist auf einem mindestens um ± 90° aus der Mittelstellung verschwenkenden Drehkranz 25 gelagert und auf dem Drehkranz seitlich verschiebbar angeordnet. Die Fahrbewegungen des auf einer passiven Leitspur 5 fahrenden Förderfahrzeugs 1 sowie die Hub-, Dreh- und Ausfahrbewegungen des Lastschlittens 24 einschließlich der Lastgabeln 31 werden von einer Systemkonsole 15 über einen Systemleitrechner 10 und ein Funkgerät 11 mit Datenfunk 13 gesteuert.

FIG.1

EP 0 302 205 A2

# Fahrerloses Förderfahrzeug

Die Erfindung betrifft ein fahrerloses Förderfahrzeug mit einer Regalanordnung für Stückgüter und mit einem höhenbeweglichen Lastschlitten mit Lastgabeln zum Überführen der Stückgüter in das Regal sowie auf ein Verfahren zur Übernahme, zum Zwischenlagern, Transport und zur Abgabe der Stückgüter mit dem fahrerlosen Förderfahrzeug.

Aus der DE-PS 33 28 241 ist bereits eine Be- und Entladevorrichtung mit einem fahrerlosen Förderfahrzeug mit den oben angeführten Merkmalen bekannt. Hierbei wird das nur mit einem Regal ausgestattete Förderfahrzeug an einer über Kopf verlaufenen Führungsschiene geführt und mit dem Förderfahrzeug ist eine auf einem gesonderten Fahrgestell befindliche Be- und Entladeeinrichtung über Gelenkstangen gelenkig verbunden. Die Be- und Entladeeinrichtung kann auch in das Förderfahrzeug einfahren und dabei mitgenommen werden. Aufgabe dieses Förderfahrzeuges ist es, eine verhältnismäßig kurze Baulänge zu ermöglichen und daß die Be- und Entladeeinrichtung die von den Stückgütern herrührende Last direkt auf den Fahrboden und nicht auf das Förderfahrzeug überträgt. Zusätzlich soll es möglich werden, die Güter in einem beliebigen Winkel zur Fahrtrasse und in einem variablen Abstand zum Fahrzeug abzustellen oder wieder aufzunehmen, ohne daß übermäßige seitliche Kippkräfte entstehen.

Die Zweiteilung bei dieser bekannten Einrichtung in ein Förderfahrzeug und eine von diesem getrennte Be- und Entladeeinrichtung ist für eine schnelle Versorgung mit Stückgütern in einem rationell arbeitenden Herstelungsbetrieb nicht sehr günstig. Außerdem ist die Kapazität des einen auf dem Förderfahrzeug vorhandenen Regals nicht besonders groß.

Der Erfindung liegt die Aufgabe zugrunde, ein Förderfahrzeug der eingangs genannten Art zu schaffen, welches selbständig alle Transportaufgaben für ein Stückgut optimal erfüllt und das ein ausreichend großes eigenes Regalvolumen aufweist. Weiterhin besteht die Aufgabe darin, ein Verfahren zum Einsetzen des Förderfahrzeuges von der Entnahme bis zur Abgabe des Stückgutes anzugeben.

Gemäß der Erfindung wird diese Aufgabe gelöst durch die in den Ansprüchen 1 bis 3 gekennzeichneten Merkamale für das Förderfahrzeug und durch die in den Ansprüchen 4 bis 6 wiedergegebenen Verfahrensmerkmale.

Der Vorteil der Erfindung besteht insbesondere darin, daß mit dem äußerst beweglichen Förderfahrzeug und seinem Aufbau mit den beiden Regalen sowie dem dazwischen angeordneten Lastschlitten eine hohe Transportleistung erzielt werden kann. Durch die passive Leitspur mit im Boden verlegten Metallbändern, die an Entscheidungsstellen durch passive Datenträger ergänzt werden, ist eine Installation von stromführenden Elektroleitungen überflüssig. Betriebsstörungen durch Leitspurdefekt fallen somit fort, da keine aktiven Elemente verwendet werden. Der an und für sich bekannte, zwischen den Fahrzeugregalen angebrachte höhenbewegliche Lastschlitten gestattet durch die Kombination mit dem Drehkranz sowohl eine beträchtliche Seitenauslage der Lastgabeln als auch, nach Aufnahme eines Stückgutes, die wechselseitige wahlweise Beschickung der Regal. Die automatische Steuerung über Datenfunk von dem Systemleitrechner gewährleistet einen äußerst flexiblen Einsatz eines oder auch mehrerer Förderfahrzeuge mit individueller Entnahme aus dem Stückgutregal und programmierter Fahrt an eine Abgabestelle. Es kann dazu über die Systemkonsole, mit der Programme zur Erstellung von Fahrweglisten für die Förderfahrzeuge in den Systemleitrechner eingegeben werden, auch jederzeit in den Fahrablauf eingegriffen werden, wenn z.B. ein Stückgut zur Erledigung eines dringlicher gewordenen Auftrages schneller befördert werden muß.

Weitere Vorteile der Erfindung ergeben sich aus der nachstehenden Erläuterung eines in der Zeichnung dargestellten Ausführungsbeispieles. Es zeigen

Fig. 1 ein Förderfahrzeug in perspektivischer Darstellung und

Fig. 2 einen Werkstattraum mit einem Stückgutlager und einem die einzelnen Werkplätze bedienenden Förderfahrzeug.

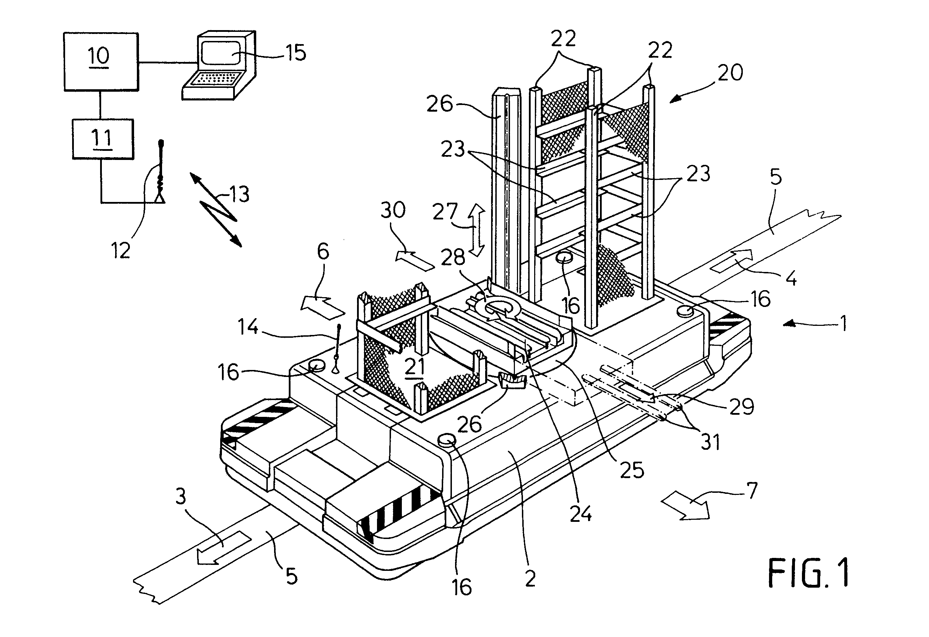

Ein Förderfahrzeug 1 entsprechend Fig. 1 hat in seinem Wagenkasten 2 übliche, nicht gesondert dargestellte, Fahr- und Lenkmotoren, die wie die gesamte Bordelektronik durch eingebaute Batterien mit der erforderlichen Energie versorgt werden. Mit Hilfe der Fahr- und Lenkmotoren kann das Förderfahrzeug 1 mit gleicher Geschwindigkeit entsprechend von Pfeilen 3 und 4 vor- und rückwärts fahren. Ebenfalls gestattet die passive Leitspursteuerung mit einem in den Boden verlegten Metallband 5 eine begrenzte Fahrt quer zu den Fahrtrichtungspfeilen 3 und 4 in Richtung von Pfeilen 6 und 7. Dieses Beweglichkeit quer zur Fahrtrichtung erleichtert das Anfahren zur Übergabe von Stückgütern und erspart besondere Weichen in der Fahrspur. Die Steuerung aller Funktionen auf dem Förderfahrzeug 1 erfolgt durch einen Systemleitrechner 10 über ein Funkgerät 11 mit dessen Antenne 12, die über durch einen Zickzackpfeil 13 angedeutete Datenfunk auf eine Antenne 14 des Förderfahrzeuges 1 wirkt. Die für die Steuerungsvorgänge im Fahrzeug erforderlichen Daten werden mit einer Systemkonsole 15 in den Systemleitrechner 10 eingegeben. Auf dem Förderfahrzeug 1 sind zur Anzeige der Fahrtrichtung Blinkleuchten 16 vorgesehen.

Auf der Oberfläche des Wagenkastens 2 sind zwei Regaltürme 20 und 21 angeordnet. Der im abgebrochenen Zustand dargestellte Regalturm 21 ist selbstverständlich ebenso hoch wie der Regalturm 20. Die Regaltürme 20 und 21 bestehen aus vier senkrechten Vierkantrohren 22, zwischen den in Abständen Winkeleisen 23 zur Aufnahme von nicht dargestellten Kästen angeordnet sind. Es ist natürliche auch möglich, in die Winkeleisen 23 Bodenbleche einzulegen, wodurch vier übereinanderliegende Fächer entstehen, in die Stückgüter aller Art eingelegt werden können. Zwischen den Regaltürmen 20 und 21 ist ein Lastschlitten 24 auf einem Drehkranz 25 montiert. Der Lastschlitten 24 kann in einem Hubgerüst 26, von dem ein Pfeiler dargestellt und ein zweiter Pfeiler nur angedeutet ist, in Richtung eines Doppelpfeiles 27 auf und abwärts bewegt werden. Der Lastschlitten 24 kann auf dem Drehkranz 25 in Richtung eines Pfeiles 28 drehen und in Richtung von Pfeilen 29 und 30 ausgefahren werden. In strichpunktierter Darstellung ist das Ausfahren des Lastschlittens 24 in Richtung des Pfeiles 29 dargestellt. Dabei ist auch Ausfahren von Lastgabeln 31 angedeutet. Der Lastschlitten 24 kann entweder vorprogrammiert durch den Systemleitrechner 10 oder auch durch Bedienung auf der Systemkonsole 15 seitlich ein- und ausgefahren, gedreht und die Höhe eines jeden Faches der Regaltürme 20 und 21 automatisch gefahren werden.

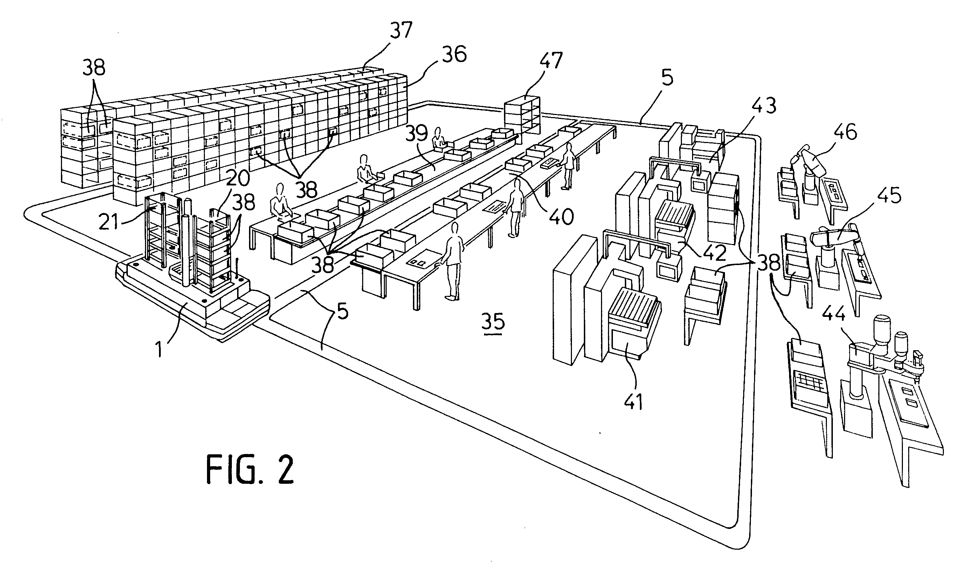

In der Fig. 2 ist ein Werkstattraum 35 dargestellt, in dem ein Förderfahrzeug 1 mittels passiver Leitspursteuerung über dem alle Teile des Werkstattraumes erfassenden Metallband 5 fahren kann. Auf einer Seite des Werkstattraumes 35 sind zwei Regalreihen 36 und 37 vorhanden, die mit Fächern für einheitlich große Kästen 38 versehen sind. Dabei sind z.B. in den Kästen 38 der Regalreihe 36 Halbzeuge für die Fertigung eingelegt und die Kästen 38 der Regalreihe 37 sind für Fertigteile vorgesehen. In der Mitte des Werkstattraumes 35 sind zwei Fertigungsbänder 39 und 40 für Handfertigung, rechts daneben drei NC-Fertigungsautomaten 41, 42 und 43 und ganz rechts drei Industrieroboter 44, 45 und 46 vorhanden, die alle mit dem Förderfahrzeug 1 zu bedienen sind. An allen Fertigungsstellen sind gleiche Kästen 38 deponiert, die mit dem Förderfahrzeug 1 durch Zwischenspeicherung in den Regaltürmen 20 oder 21 angefahren oder wieder abgeholt werden. Am Ende des Fertigungsbandes 39 ist noch ein Regal 47 zur Zwischenspeicherung von Kästen 38 vorgesehen.

Zur rationellen Versorgung der der Fertigungsstellen mit den Kästen 38 aus dem Regal 36 und zum Zurückfahren an das Regal 37 wird auf der Systemkonsole 15 ein Programm in den Systemleitrechner 10 zur Erstellung einer Fahrwegliste für das Förderfahrzeug 1 eingegeben. Bei der Erstellung der Fahrwegliste werden die Zeitpunkte für die Versorgung der einzelnen Fertigungsstellen mit Halbzeugkästen berücksichtigt. Dabei muß auch darauf geachtet werden, daß die Gesamtfahrstrecke möglichst kurz gehalten wird. Jede der Fertigungsstellen 39 bis 47 erhält eine Platznummer, die in der Fahrwegliste die Übergabepunkte für die Kästen 38 kennzeichnen und die einzelnen Fahrstrecken markieren.

Es besteht auch die Möglichkeit, in einem größeren Fertigungsbetrieb, bei dem eine ganze Anzahl von unterschiedlichen Werkstätten 35 bedient werden müssen, mehrere Förderfahrzeuge 1 einzusetzen. Dabei ist eine Optimierung für die Fahrweglisten der einzelnen Förderfahrzeuge hinsichtlich Zeitbedingung, Transportkapazität, Kapazitätsauslastung und Routenwahl anzustreben. Günstig ist eine minimale mittlere Transportweglänge, wobei auch ein Umschichten von Aufträgen von einem Fahrzeug zu einem ánderen und die gegenseitige Vertretung von Fahrzeugen in Erwägung zu ziehen ist. Auch muß z.B. das Verhältnis von Eilaufträgen zu Aufträgen mit weniger kritischen Zeitbedingungen in einem vernünftigen Verhältnis zu einander stehen. Ein wichtiger Punkt bei der Optimierung der Fahrweglisten besteht auch in der Bewertung der einzelnen Streckenabschnitte. Es kann dabei Vorrang- oder Gefährdungsstrecken geben, die z.B. durch die Art der Aufträge bzw. Fertigungsmittel oder durch stark belastete Strecken gekannzeichnet sind.

## Ansprüche

1. Fahrerloses Förderfahrzeug mit einer Regalanordnung für Stückgüter und mit einem höhenbeweglichen Lastschlitten mit Lastgabeln zum Überführen der Stückgüter in das Regal, **dadurch gekennzeichnet,** daß auf dem Förderfahrzeug (1) zwei Regaltürme (20, 21) und ein zwischen diesen angeordneter Lastschlitten (24) zur Versorgung der beiden Regaltürme mit Stückgütern (38) angebracht sind, und daß das Förderfahrzeug (1) auf einer passiven Leitspur (5) mit batteriebetriebenen Fahr- und Lenkmotoren vorwärts rückwärts und quer zur Leitspur führt.

2. Förderfahrzeug nach Anspruch 1, **dadurch gekennzeichnet,** daß der in einem Hubgerüst (26, 27) angeordnete Lastschlitten (24) auf einem um mindestens ± 90° aus der Mittelstellung verschwenkenden Drehkranz (25) gelagert ist und der Lastschlitten auf dem Drehkranz und die Lastgabein (31) auf dem Lastschlitten seitlich ausfahrbar sind.

3. Förderfahrzeug nach den Ansprüchen 1 und 2, **dadurch gekennzeichnet,** daß die Fahrbewegungen des Förderfahrzeuges (1), die Hub-, Dreh- und Ausfahrbewegungen des Lastschlittens (24) einschließlich der Lastgabeln (31) von einer Systemkonsole (15) über einen Systemleitrechner (10) und ein Funkgerät (11) mit Datenfunk (13) gesteuert sind.

4. Verfahren zur Übernahem, zum Zwischenlagern, Transport und zur Abgabe der Stückgüter mit dem fahrerlosen Förderfahrzeug nach den Ansprüchen 1 bis 3, **dadurch gekennzeichnet,** daß in den Systemleitrechner über die Systemkonsole ein Programm zur Erstellung einer Fahrwegliste eingegeben wird, mit der das Förderfahrzeug über den Datenfunk an ein Stückgutregal gesteuert wird, mit den Lastgabeln vorbestimmte Stückgüter aus dem Stückgutregal entnommen werden, die Stückgüter in die Regaltürme eingeordnet werden, das Förderfahrzeug zu den Abgabstellen gesteurt wird und das für die jeweilige Abgabestelle bestimmte Stückgut gezielt den Regaltürmen entnommen und an der Abgabestelle abgelegt wird.

5. Verfahren nach Anspruch 4, **dadurch gekennzeichnet,** daß bei der Erstellung der Fahrwegliste die Zeitpunkte der an den Abgabestellen der Stückgüter zu fertigenden Aufträge und eine günstige Gesamtfahrstrecke berücksichtigt werden.

6. Verfahren mit mehreren Förderfahrzeugen nach den Ansprüchen 4 und 5, **dadurch gekennzeichnet,** daß die Fahrweglisten der einzelnen Förderfahrzeuge aufeinander abgestimmt und optimiert werden, wobei auch Möglichkeiten zur Übergabe von Stückgütern von einem Förderfahrzeug an ein anderes Förderfahrzeug aufgenommen werden.

EP 0 302 205 A2

FIG.1

FIG. 2

EP 0 302 205 A2